# EUROPEAN PATENT SPECIFICATION

(11) **EP 4 108 621 B1**
(45) Date of publication and mention of the grant of the patent: **02.04.2025**
(21) Application number: 21181039.5
(22) Date of filing: 23.06.2021
(51) Int. Cl.: B66C 13/40, B66C 13/46, B66C 23/90, B66F 9/24, E02F 9/20, E02F 9/26, G05B 19/042, G05B 19/05

(54) **WORKING EQUIPMENT ARRANGED FOR REMOTE CONFIGURATION**
ARBEITSAUSRÜSTUNG MIT ANORDNUNG FÜR EINE FERNKONFIGURATION
ÉQUIPEMENT DE TRAVAIL CONÇU POUR UNE CONFIGURATION À DISTANCE

(43) Date of publication of application: 28.12.2022
(73) Proprietor: Hiab AB, 215 32 Malmö (SE)
(72) Inventor: STIGZELIUS, Eric, Espoo (FI); NYMAN, Mathias, Esbo (FI); LEPPÄNEN, Tapani, Tampere (FI); HAIKIO, Antti, Littoinen (FI)
(74) Representative: Bjerkén Hynell KB

(56) References cited:
- EP-A1- 2 489 625
- CN-A- 101 606 176
- US-A1- 2011 227 744

## Description

### Technical field

The present disclosure addresses remote service for working equipment, typically working equipment mounted to vehicles, such as hooklifts, skip-loaders or cranes, other examples include tail lifts, forklifts, and forestry or agricultural mobile equipment.

### Background

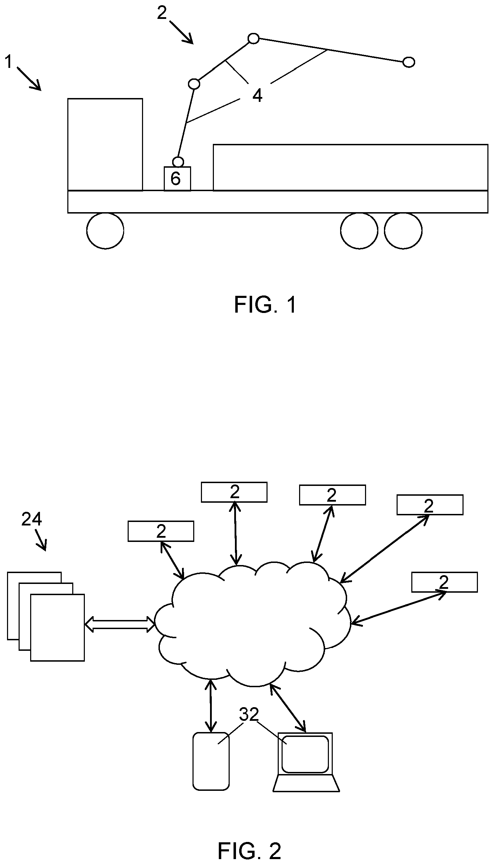

The types of working equipment mentioned above are normally serviced and/or repaired at a local workshop or by the equipment operators or fleet owners themselves. During service, or under troubleshooting, a remote support technician, i.e. a support technician at a remote location in relation to the working equipment to be serviced and/or repaired, may then be contacted for further support and input to the technical problems that have arisen. Presently used remote service tools that are available, offer the support technician at a remote location to see diagnostics and status of e.g. the control system, I/O-ports, the operator manoeuvring unit of the working equipment. Additional equipment data such as log files describing the usage of the working equipment may also be downloaded for further analysis. This is set up through a diagnostics service, implemented as a cloud service or as a service distributed on several processing units, connected to the working equipment over a wireless network such as 4G/Internet. This set up is schematically illustrated in figure 2 where a number of working equipment 2 are connectable to an external server 24 via the wireless network. Various user devices 32 (e.g., computers or smartphones) may be connected to the external server via the cloud. The working equipment comprises a communication interface device such as a gateway device through which it is connectable to the remote diagnostics service at the external sever.

Some patent documents in the technical field of obtaining information for remote diagnostic monitoring of e.g. mobile cranes, will now be identified and briefly discussed.

EP2489625A1 discloses a working equipment specifically for mobile cranes in which a base is provided on which extendable arms is mounted. The working equipment further consists of control unit to control the operation of extendable arm and receiving sensor signal. The working equipment provides a signal to the remote control system for the identification/type of the crane. Identification is used for enabling the mobile processing device to select the appropriate control software or algorithms or the like to control the identified crane.

CN101606176B discloses a system that allows mobile assets (i.e., forklifts, reach trucks, rotary forklifts, pedestrian-operated forklift pallet trucks, manually operated pallet trucks) to wirelessly communicate with a remote diagnostic server. The mobile asset consists of a control system, which controls the hydraulic system of the vehicle and can monitor the sensor inputs. The system performs authorization by sending identification information (i.e., identification of the vehicle or the registered operator of the particular material) to the remote server. After the authorization of the vehicle is done, custom parameters can be used to reconfigure at least one function of the material handling vehicle. US10020995B2 discloses a vehicle having one or more processing modules. Each processing modules may hand-off processing to other modules depending on its health, processing load, or by third-party control. The vehicle also consists of a remote control module that receives a request from a remote source. The remote source commands the vehicle for functioning purpose and authentication. If the vehicle is successfully authenticated, the remote source will execute the request.

US8116759B2 discloses monitoring, diagnosing, and/or testing of a control network mounted on a vehicle using wireless diagnostic equipment. The operator may enter a vehicle identifier into the portable electronic diagnostic equipment for authentication and then retrieves the appropriate diagnostic and maintenance information over wireless communication link. The operator can also obtain service advice from mechanics, electricians, engineers or other technical experts remotely located at a central location.

In order to provide the user more advanced support and offer remote troubleshooting the support technician needs to be able to change the configuration of the working equipment remotely. Due to the nature of the working equipment and the damages that may occur if the remote configuration is used by mistake, or for malicious purposes, the safety aspect is of great importance. Thus, the object of the present invention is to achieve an improved working equipment configured to enable remote parameter configurations to be performed in safe manner.

### Summary

The above-mentioned object is achieved by the present invention according to the independent claims.

Preferred embodiments are set forth in the dependent claims.

The present invention addresses how to verify that a remote service technician is connected to the intended working equipment before enabling remote configuration of the equipment. This is important as changing the configuration of a working equipment may imply great affects to the functionality of the equipment. Modifications could e.g. be unintentionally targeted to the wrong gateway and programmable logic controller (PLC), just by selecting a wrong working equipment (e.g. based solely on its serial number) when setting up a session. A user who has gained access to the MQTT (Message Queuing Telemetry Transport) communication (perhaps by getting credentials to the diagnostics tool) could also send harmful commands to any reachable working equipment. The MQTT is a lightweight, publish-subscribe network protocol that transports messages between devices.

An undesirable but less dangerous action would be to switch the working equipment to a service mode and thereby preventing normal use, whereas actually changing configuration parameters could have severe consequences, as there is a zero tolerance to human errors and malicious use.

Thus, the present invention addresses the verification process to ensure that it is safe to make the transition to the configuration mode of the working equipment.

It is the communication interface device at the working equipment, or as an alternative, the communication interface device in combination with the remote external server, that determines if the configuration mode may be initiated with the remote external server. The configuration mode is hence specific for a particular working equipment. As an illustrative example: a user may be in a monitoring mode with e.g. ten working equipment in a fleet and in configuration mode with one selected working equipment. The verification process at the working equipment ascertains a secure and user-friendly way to enter a configuration mode for the selected working equipment.

The configuration mode session that is set up, as a result of the verification process, is dedicated to the user at a client device connected to the external server via the cloud.

The present invention ensures that the intended working equipment has been chosen for a remote configuration mode session before allowing any configuration to be made. By using the communication interface device at the working equipment for the verification, security is maintained and the solution is less susceptible to unwanted take-overs of the working equipment by incepting the communication between the remote diagnostics service at the external server and the working equipment. Further, as the verification builds on user command interactions there is no need for the service technician to trust having the correct equipment serial number that is easily forgotten and may be mistyped. Only an operator that has access and means to operate the working equipment can perform the user interactions. This is an easy, simple and safe way to acknowledge and authorize entering the configuration mode by the equipment operator.

By applying the present invention, it will be easier for the local technicians to get hands-on support from remote technicians. The local crane operator will not need to handle the serial numbers etc. in order to get support, and the remote technician will be able to offer the support in a faster and more secure and safe way.

The service interface applied by the external server is based on presently applied online diagnostic tools through which a remote support technician may connect to the working equipment to view the equipment status.

Thus, the ability to change the configuration parameters remotely would improve the service of the remote support technician, which is usually an expert of the working equipment, increase the quality of service, and off-load the local service technician.

### Brief description of the drawings

Figure 1 is a schematic illustration of a vehicle provided with a working equipment according to the present invention.
Figure 2 is a schematic illustration of a service system for a working equipment according to the present invention.
Figure 3 is a block diagram schematically illustrating the working equipment according to the present invention.
Figure 4 is a flow diagram of the method according to the present invention.
Figure 5 is a schematic illustration of an exemplary verification procedure of the method according to the present invention.

### Detailed description

The working equipment, the vehicle, and the method, will now be described in detail with references to the appended figures. Throughout the figures the same, or similar, items have the same reference signs. Moreover, the items and the figures are not necessarily to scale, emphasis instead being placed upon illustrating the principles of the invention.

The present invention relates to a working equipment 2, typically a working equipment mounted to a vehicle 1, which is schematically illustrated in figure 1. The working equipment may be hooklifts, skip-loaders or cranes, other examples include tail lifts, forklifts, and forestry or agricultural mobile equipment. The working equipment comprises a movable arm 4 connected to a base 6, and the movable arm may comprise one or many booms, e.g. telescopic booms, connected to each other via joints, and also a tip end part where any type of tool may be attached, e.g. a hook, a fork, or a forestry tool.

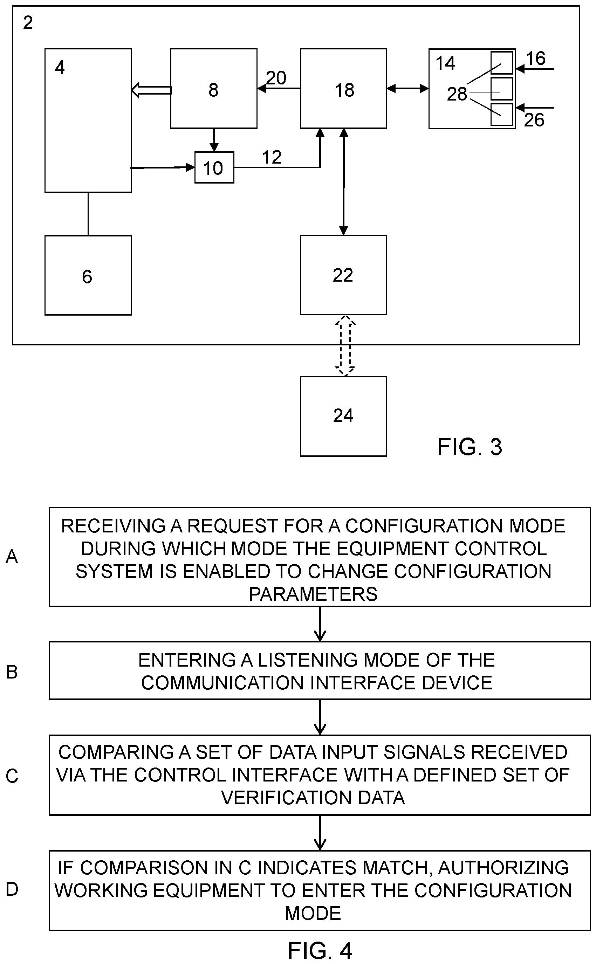

Figure 3 is a block diagram showing the various parts of the working equipment 2. The working equipment further comprises a system 8 of actuators, e.g. hydraulically operated actuators, arranged to control movements of the arm in relation to the base, and a sensor system 10 configured to monitor positions of the movable arm 4, and operating conditions of the system 8 of actuators, and to generate sensor signals 12 in response to the monitored positions and operating conditions.

The working equipment also comprises a control interface 14 arranged to receive a set of operating instructions 16 defining wanted movements of the movable arm 4. These operating instructions are typically applied, by an operator, via input members 28, e.g. buttons, levers, etc.

An equipment control system 18 is provided, arranged to store configuration parameters for the sensor system 10, the system 8 of actuators, and the movable arm 4, and to generate driving instructions 20 to be applied to the system 8 of actuators.

The generated driving instructions 20 are based on the received set of operating instructions 16 defining wanted movements of the movable arm 4, the generated sensor signals 12, and the stored configuration parameters.

As an illustrative example, the configuration parameters for a crane may comprise various control parameters, the type of pressure sensors used, settings of a particular sensor, which slewing direction to take in response to a lever activation, etc.

The working equipment is also provided with a communication interface device 22 arranged to manage a communication session between the working equipment 2 and an external server 24 over a wireless network, e.g. a mobile network 4G or 5G, or any internet protocol.

The communication interface device 22 is connected to the equipment control system 18 by a bidirectional connection and is further arranged to transmit stored configuration parameters or status indications received from the equipment control system 18 to the external server 24 over the wireless network during a communication session, e.g. when the equipment control system is in a monitoring mode. A monitoring mode is a mode where remote users may access and study various parameters including the configuration parameters of the working equipment for diagnostic purposes. It is not possible to change any configuration parameters of the working equipment in the monitoring mode.

The equipment control system 18 is configured to be in a configuration mode, wherein in the configuration mode the equipment control system is enabled to change the configuration parameters.

The communication interface device 22, alone or in combination with the external server 24, is configured to determine if the equipment control system 18 is authorized to be in a configuration mode. Being in the configuration mode comprises receiving instructions at the communication interface device 22 from the external server during a communication session that are safe to execute by the equipment control system 18 in order to change configuration parameters of the equipment control system 18. Only one user would normally be allowed to enter the configuration mode at the same time.

The communication interface device 22 is further configured to enter a listening mode in response to receiving a request for a configuration mode, e.g. from the external server.

In the listening mode, the communication interface device 22, or the external server 24, is configured to compare a set of data in input signals 26 received via the control interface 14 with a defined set of verification data. In response of finding a matching set of data of the received input signals 26 in the defined set of verification data, the communication interface device 22, or the external server in combination with the communication interface device, is configured to authorize the equipment control system 18 to enter the configuration mode. According to one alternative the comparison is performed by the communication interface device 22. In another alternative, the data to be compared is communicated to the external server 24 via a secure communication link and the external server 24 performs the comparison and sends back the result to the communication interface device 22.

Thus, the communication interface device of the working equipment is connected to the equipment control system of the working equipment, which in turn controls the actuators of the working equipment and in accordance with operation commands received from the operator of the working equipment through a control interface.

Client devices, such as mobile phones or network-connected computers, operated by remote service technicians, may be connected as a client device of the remote diagnostics service at the external server and through this service receive status and diagnostics of the working equipment, see figure 2.

The remote diagnostics service is implemented, according to the invention to communicate, with the communication interface device in at least two communication modes, a monitoring mode for monitoring purposes and a configuration mode to enable a remote technician to change configuration parameters of the working equipment.

The configuration mode for the communication is dependent on that the equipment control system 18 is authorized to be in a configuration mode. As long as the equipment control system has not been authorized to be in a configuration mode for a remote service technician the communication between the remote service technician and the communication interface device 22 of the equipment is in a monitoring mode. In an embodiment of the invention the remote external server may be set up to only allow the control system 18 of a working equipment to enter into the configuration mode with one remote service technician at the same time.

The remote diagnostics service will only be able to serve passive status monitoring when in the monitoring mode while the configuration mode will further enable the ability to configure actively the working equipment for a user of the system, such as a remote service technician.

The monitoring mode may be the default mode in which the diagnostics service operates, and may allow a user to monitor the status of all working equipment which the user has access to, such as a fleet of equipment or other group of equipment.

The remote external server may be set up to allow the remote service technician only to enter into the configuration mode with one working equipment at the same time. As an alternative, the remote service technician may be allowed to enter into the configuration mode with a plurality of working equipment at the same time.

According to an embodiment, the verification data includes a defined set of data received from the external server 24 or a defined set of data stored in the communication interface device 22. In the first case, where the verification data is received from the external server, the verification data may be transmitted at the same time as the request for entering a configuration mode is sent. The verification data may then be uniquely determined for that specific request.

According to another embodiment, the communication interface device 22 is configured to be in the listening mode during a predetermined and adjustable time period in the range of 1 - 180 seconds initiated when the request for a configuration mode is received. If no input signal is received at the control interface 14 during the listening mode duration the listening mode ends, but may be initiated again, if a new request for a configuration mode is received.

In a further embodiment, during the listening mode, the communication interface device 22 or the equipment control system 18 is configured to enable one or many input members 28 of the control interface 14 to receive the input signals 26. The control interface 14 is then configured to receive the input signals 26 from an operator of the working equipment 2.

In another embodiment, the communication interface device 22 is further arranged to transmit the result of the comparison of input signals 26 received via the control interface 14 with the defined set of verification data, to the external server 24.

Thus, and in addition, the working equipment may store and transmit successful and unsuccessful attempts of receiving the correct user interactions while it is in the listening mode. Time stamps and user identifications may further be accompanied in this feedback data. This data may be stored by the diagnostics service at the external server to give traceability. In addition to this, feedback data from the verification process of the operator's user interaction on the working equipment may be saved to a database together with the service technician's actions to request the configuration mode. This will result in an audit trail to record who initiated the configuration mode, and when it was initiated. It will also be possible to record who acknowledged and authorized the configuration mode, and when that was made, which is relevant if the working equipment operator needs to identify to get authorized to perform user interactions on the working equipment.

According to still another embodiment, the communication interface device 22 is configured to end an ongoing configuration mode if no change of configuration parameters are performed within a predetermined time period. This predetermined time period may have a duration of minutes up to an hour. Automatically ending the configuration mode ensures that the working equipment is not open for configuration of the configuration parameters for a too long time period which may allow for accidental mistakes or security breaches, and is hence offering an extra safety feature.

The present invention also relates to a method in a working equipment 2. The working equipment has been described in detail above and it is herein referred to that description. The method will now be described with references to the flow diagram shown in figure 4.

Thus, the working equipment comprises a movable arm 4 connected to a base 6, further comprising a system 8 of actuators arranged to control movements of the arm in relation to the base; a sensor system 10 configured to monitor positions of the movable arm 4, and operating conditions of the system 8 of actuators, and to generate sensor signals 12 in response to the monitored positions and operating conditions. The working equipment further comprises a control interface 14 arranged to receive a set of operating instructions 16 defining wanted movements of the movable arm 4; an equipment control system 18 arranged to store configuration parameters for the sensor system 10, the system 8 of actuators and the movable arm 4, and to generate driving instructions 20 to be applied to the system 8 of actuators based on the received set of operating instructions 16 defining wanted movements of the movable arm 4, the generated sensor signals 12 and the stored configuration parameters. Furthermore, a communication interface device 22 is provided, arranged to manage a communication session between the working equipment 2 and an external server 24 over a wireless network. The communication interface device 22 is connected to the equipment control system 18 and is further arranged to transmit stored configuration parameters or status indications received from the equipment control system 18 to the external server 24 over the wireless network.

The method comprises:
A - Receiving by said communication interface device 22 a request for a configuration mode from the external server. In the configuration mode the equipment control system 18 is enabled to change the configuration parameters, and wherein being in the configuration mode comprises receiving instructions at the communication interface device 22 from the external server during a communication session that are safe to execute by the equipment control system 18 in order to change configuration parameters of the equipment control system 18.
B - Entering a listening mode of the communication interface device 22.
C - Comparing by the communication inteface device 22 or the external server 24 a set of data in input signals 26 received via the control interface 14 with a defined set of verification data, and in response of finding a matching set of data of the received input signals 26 in the defined set of verification data, the method further comprises:
   D - Authorizing by the communication interface device 22 or the external server 24 in combination with the communication interface device 22 the equipment control system 18 to enter the configuration mode.

As discussed above, the comparison performed in step C, may be performed either by the communication interface device 22, or by the external server 24.

In the following, some embodiments of the method are listed. These have the same technical features and advantages as for the corresponding features of the working equipment described above. Consequently, these technical features and advantages are not repeated or explained anew in order to avoid unnecessary repetition.

In one embodiment, the verification data includes a defined set of data received from the external server 24 or a defined set of data stored in the communication interface device 22. According to a further embodiment, the method comprises being in the listening mode during a predetermined and adjustable time period in the range of 1 - 180 seconds. According to another embodiment the method comprises:
- enabling, during the listening mode, one or many input members 28 of the control interface 14 to receive input signals 26, and
- receiving, by the control interface 14, the input signals 26 from an operator of the working equipment 2.

In a further embodiment, the method comprises transmitting, by the communication interface device 22, the result of the comparison of input signals 26 received via the control interface 14 with the defined set of verification data, to the external server 24.

Preferably, the method also comprises ending an ongoing configuration mode if no change of configuration parameters are performed within a predetermined time period.

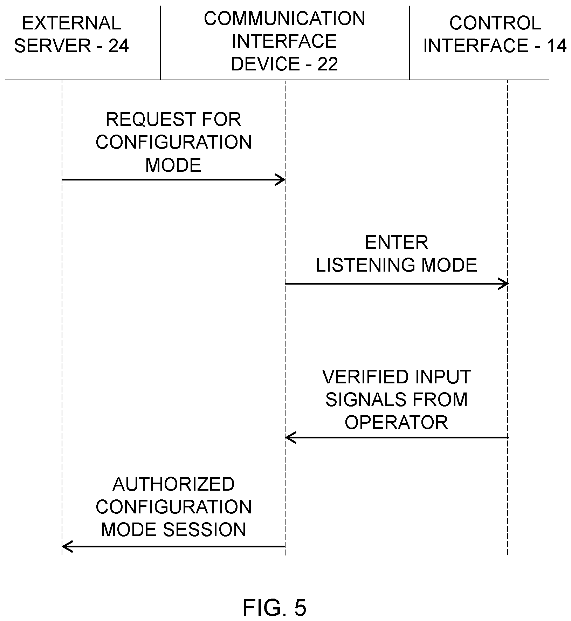

Figure 5 is a schematic illustration of an exemplary procedure applying the method according the present invention. In the figure, the horizontal arrows indicate how control of the procedure is changed between the external server, the communication interface device, and the control interface.

First, the external server 24 generates and sends a request for a configuration mode prior to attempting any two-way operations. This may be performed by a remote service technician via a client device, e.g. a smartphone.

The communication interface device 22 thereby starts the listening mode during a predetermined time period. During the listening mode one or many input members 28 (e.g. buttons and/or levers) of the control interface 14 are enabled to receive input signals from the operator. Thus, the operator must know how and when to generate the specific input signals required for authorizing the configuration mode. He may then receive the required information from a remote technician e.g. via phone or SMS. As an illustrative example to this could be to pull a specific lever or button, or a specified sequence of interacting with the levers or buttons. These interactions may imply, under normal operation of the working equipment, specific operating instructions. As another alternative the operator may have locally stored information about the specific input signals, e.g. in a written or digital manual. The key aspect here is that the operator must have access and being physically close to the working equipment in order to enter the specific input signal via the control interface.

If the received input signal corresponds to the verification data and being entered within the duration of the listening mode, then the communication interface device 22 acknowledge the ongoing communication session as authorized to enter the configuration mode, i.e. to enter a mode where configuration parameters of the working equipment may be amended.

Secondly, if it is determined that the working equipment identifies the defined set of user interactions during the specified time period, then the ongoing communication session with the diagnostics service will be authorized as a configuration mode session. During the configuration mode session, the working equipment may be changed from operation state to service state and configuration parameter changes at the working equipment is enabled during the session with the diagnostics service at the external server.

The present invention is not limited to the above-described preferred embodiments. Various alternatives, modifications and equivalents may be used. Therefore, the above embodiments should not be taken as limiting the scope of the invention, which is defined by the appending claims.

## Claims

1. A working equipment (2) comprising:
- a movable arm (4) connected to a base (6), further comprising a system (8) of actuators arranged to control movements of the arm in relation to the base;
- a sensor system (10) configured to monitor positions of the movable arm (4), and operating conditions of the system (8) of actuators, and to generate sensor signals (12) in response to the monitored positions and operating conditions;
- a control interface (14) arranged to receive a set of operating instructions (16) defining wanted movements of the movable arm (4);
- an equipment control system (18) arranged to store configuration parameters for the sensor system (10), the system (8) of actuators and the movable arm (4), and to generate driving instructions (20) to be applied to the system (8) of actuators based on the received set of operating instructions (16) defining wanted movements of the movable arm (4), the generated sensor signals (12) and the stored configuration parameters, and
- a communication interface device (22) arranged to manage a communication session between the working equipment (2) and an external server (24) over a wireless network, wherein the communication interface device (22) is connected to the equipment control system (18) and is further arranged to transmit stored configuration parameters or status indications received from the equipment control system (18) to the external server (24) over the wireless network,
**characterized in that**
A - the communication interface device (22) is configured to receive a request for a configuration mode from said external server (24), wherein in said configuration mode the equipment control system (18) is enabled to change said configuration parameters, and wherein being in the configuration mode comprises receiving instructions at the communication interface device (22) from the external server during a communication session that are safe to execute by the equipment control system (18) in order to change configuration parameters of the equipment control system (18),
B - upon receipt of a request for a configuration mode, the communication interface device (22) is configured to enter a listening mode,
C - the communication interface device (22), or the external server (24), being in the listening mode, is configured to compare a set of data in input signals (26) received via the control interface (14) with a defined set of verification data, and
D - in response of finding a matching set of data of the received input signals (26) in said defined set of verification data, the communication interface device (22), or the external server (24) in combination with the communication interface device (22), is configured to authorize the equipment control system (18) to enter the configuration mode.

2. The working equipment (2) according to claim 1, wherein the verification data includes a defined set of data received from the external server (24) or a defined set of data stored in the communication interface device (22).

3. The working equipment (2) according to claim 1 or 2, wherein the communication interface device (22) is configured to be in the listening mode during a predetermined and adjustable time period in the range of 1 - 180 seconds.

4. The working equipment (2) according to any of claims 1-3, wherein during said listening mode, the communication interface device (22) or the equipment control system (18) is configured to enable one or many input members (28) of said control interface (14) to receive said input signals (26), and wherein the control interface (14) is configured to receive said input signals (26) from an operator of the working equipment (2).

5. The working equipment (2) according to any of claims 1-4, wherein the communication interface device (22) is further arranged to transmit the result of the comparison of input signals (26) received via the control interface (14) with the defined set of verification data, to the external server (24).

6. The working equipment (2) according to any of claims 1-5, wherein the communication interface device (22) is configured to end an ongoing configuration mode if no change of configuration parameters are performed within a predetermined time period.

7. A vehicle (1) comprising a working equipment (2) according to any of claims 1-6.

8. A method in a working equipment (2) according to any of the preceding claims, **characterized in that** the method comprises:
A - receiving, by said communication interface device (22), a request for a configuration mode from said external server (24), wherein in said configuration mode the equipment control system (18) is enabled to change said configuration parameters, and wherein being in the configuration mode comprises receiving instructions at the communication interface device (22) from the external server during a communication session that are safe to execute by the equipment control system (18) in order to change configuration parameters of the equipment control system (18);
B - entering a listening mode of the communication interface device (22);
C - comparing, by the communication interface device (22), or the external server (24), a set of data in input signals (26) received via the control interface (14) with a defined set of verification data, and in response of finding a matching set of data of the received input signals (26) in said defined set of verification data, the method further comprises:
D - authorizing, by the communication interface device (22) or the external server (24) in combination with the communication interface device (22), the equipment control system (18) to enter the configuration mode.

9. The method according to claim 8, wherein the verification data includes a defined set of data received from the external server (24) or a defined set of data stored in the communication interface device (22).

10. The method according to claim 8 or 9, comprising being in the listening mode during a predetermined and adjustable time period in the range of 1 - 180 seconds.

11. The method according to any of claims 8-10, comprising:
- enabling, during said listening mode, one or many input members (28) of said control interface (14) to receive input signals (26), and
- receiving, by the control interface (14), said input signals (26) from an operator of the working equipment (2).

12. The method according to any of claims 8-11, comprising transmitting, by the communication interface device (22), the result of the comparison of input signals (26) received via the control interface (14) with the defined set of verification data, to the external server (24).

13. The method according to any of claims 8-12, comprising ending an ongoing configuration mode if no change of configuration parameters is performed within a predetermined time period.

## Patentansprüche

1. Arbeitsausrüstung (2), umfassend:
- einen beweglichen Arm (4), der mit einer Basis (6) verbunden ist, ferner umfassend ein System (8) von Aktuatoren, die dazu angeordnet sind, Bewegungen des Arms in Bezug auf die Basis zu steuern;
- ein Sensorsystem (10), das dazu ausgestaltet ist, Positionen des beweglichen Arms (4) und Betriebsbedingungen des Systems (8) von Aktuatoren zu überwachen und Sensorsignale (12) in Reaktion auf die überwachten Positionen und Betriebsbedingungen zu erzeugen;
- eine Steuerschnittstelle (14), die dazu angeordnet ist, einen Satz von Betriebsanweisungen (16), die gewünschte Bewegungen des beweglichen Arms (4) definieren, zu empfangen;
- ein Ausrüstungssteuersystem (18), das dazu angeordnet ist, Konfigurationsparameter für das Sensorsystem (10), das System (8) von Aktuatoren und den beweglichen Arm (4) zu speichern und um Antriebsanweisungen (20) zu erzeugen, die auf das System (8) von Aktuatoren anzuwenden sind, basierend auf dem empfangenen Satz von Betriebsanweisungen (16), die gewünschte Bewegungen des beweglichen Arms (4) definieren, den erzeugten Sensorsignalen (12) und den gespeicherten Konfigurationsparametern, und
- eine Kommunikationsschnittstellenvorrichtung (22), die dazu angeordnet ist, eine Kommunikationssitzung zwischen der Arbeitsausrüstung (2) und einem externen Server (24) über ein drahtloses Netzwerk zu verwalten, wobei die Kommunikationsschnittstellenvorrichtung (22) mit dem Ausrüstungssteuersystem (18) verbunden ist und ferner dazu angeordnet ist, gespeicherte Konfigurationsparameter oder Statusanzeigen, die von dem Ausrüstungssteuersystem (18) empfangen werden, über das drahtlose Netzwerk an den externen Server (24) zu übertragen,
**dadurch gekennzeichnet, dass**:
A - die Kommunikationsschnittstellenvorrichtung (22) dazu ausgestaltet ist, eine Anforderung für einen Konfigurationsmodus von dem externen Server (24) zu empfangen, wobei in dem Konfigurationsmodus das Ausrüstungssteuersystem (18) in die Lage versetzt wird, die Konfigurationsparameter zu ändern, und wobei das Befinden in dem Konfigurationsmodus das Empfangen von Anweisungen an der Kommunikationsschnittstellenvorrichtung (22) von dem externen Server während einer Kommunikationssitzung umfasst, die von dem Ausrüstungssteuersystem (18) sicher auszuführen sind, um Konfigurationsparameter des Ausrüstungssteuersystems (18) zu ändern,
B - bei Empfang einer Anforderung für einen Konfigurationsmodus die Kommunikationsschnittstelle (22) dazu ausgestaltet ist, in einen Abhörmodus einzutreten,
C - die Kommunikationsschnittstellenvorrichtung (22) oder der externe Server (24), die/der sich im Abhörmodus befindet, dazu ausgestaltet ist, einen Satz von Daten in Eingangssignalen (26), die über die Steuerschnittstelle (14) empfangen werden, mit einem definierten Satz von Verifizierungsdaten zu vergleichen, und
D - in Reaktion auf das Finden eines übereinstimmenden Satzes von Daten der empfangenen Eingangssignale (26) in dem definierten Satz von Verifizierungsdaten die Kommunikationsschnittstellenvorrichtung (22) oder der externe Server (24) in Kombination mit der Kommunikationsschnittstellenvorrichtung (22) dazu ausgestaltet ist, das Ausrüstungssteuersystem (18) zu autorisieren, in den Konfigurationsmodus einzutreten.

2. Arbeitsausrüstung (2) nach Anspruch 1, wobei die Verifizierungsdaten einen definierten Satz von Daten, die von dem externen Server (24) empfangen werden, oder einen definierten Satz von Daten, die in der Kommunikationsschnittstellenvorrichtung (22) gespeichert sind, umfassen.

3. Arbeitsausrüstung (2) nach Anspruch 1 oder 2, wobei die Kommunikationsschnittstellenvorrichtung (22) dazu ausgestaltet ist, sich während einer vorbestimmten und einstellbaren Zeitspanne im Bereich von 1 - 180 Sekunden im Abhörmodus zu befinden.

4. Arbeitsausrüstung (2) nach einem der Ansprüche 1 bis 3, wobei während des Abhörmodus die Kommunikationsschnittstellenvorrichtung (22) oder das Ausrüstungssteuersystem (18) dazu ausgestaltet ist, einem oder mehreren Eingangselementen (28) der Steuerschnittstelle (14) zu ermöglichen, die Eingangssignale (26) zu empfangen, und wobei die Steuerschnittstelle (14) dazu ausgestaltet ist, die Eingangssignale (26) von einem Bediener der Arbeitsausrüstung (2) zu empfangen.

5. Arbeitsausrüstung (2) nach einem der Ansprüche 1 bis 4, wobei die Kommunikationsschnittstellenvorrichtung (22) ferner angeordnet ist, um das Ergebnis des Vergleichs von über die Steuerschnittstelle (14) empfangenen Eingangssignalen (26) mit dem definierten Satz von Verifizierungsdaten an den externen Server (24) zu übertragen.

6. Arbeitsausrüstung (2) nach einem der Ansprüche 1 bis 5, wobei die Kommunikationsschnittstellenvorrichtung (22) dazu ausgestaltet ist, einen laufenden Konfigurationsmodus zu beenden, wenn innerhalb einer vorbestimmten Zeitspanne keine Änderung der Konfigurationsparameter vorgenommen wird.

7. Fahrzeug (1), umfassend eine Arbeitsausrüstung (2) nach einem der Ansprüche 1 bis 6.

8. Verfahren in einer Arbeitsausrüstung (2) nach einem der vorangehenden Ansprüche, **dadurch gekennzeichnet, dass** das Verfahren umfasst:
A - Empfangen einer Anforderung für einen Konfigurationsmodus von dem externen Server (24) durch die Kommunikationsschnittstellenvorrichtung (22), wobei in dem Konfigurationsmodus das Ausrüstungssteuersystem (18) in die Lage versetzt wird, die Konfigurationsparameter zu ändern, und wobei das Befinden in dem Konfigurationsmodus das Empfangen von Anweisungen an der Kommunikationsschnittstellenvorrichtung (22) von dem externen Server während einer Kommunikationssitzung umfasst, die von dem Ausrüstungssteuersystem (18) sicher auszuführen sind, um Konfigurationsparameter des Ausrüstungssteuersystems (18) zu ändern;
B - Eintreten in einen Abhörmodus der Kommunikationsschnittstelle (22);
C - Vergleichen eines Satzes von Daten in Eingangssignalen (26), die über die Steuerschnittstelle (14) empfangen werden, mit einem definierten Satz von Verifizierungsdaten durch die Kommunikationsschnittstellenvorrichtung (22) oder den externen Server (24), und in Reaktion auf das Finden eines übereinstimmenden Satzes von Daten der empfangenen Eingangssignale (26) in dem definierten Satz von Verifizierungsdaten, umfasst das Verfahren ferner:
D - Autorisieren des Ausrüstungssteuersystems (18) durch die Kommunikationsschnittstellenvorrichtung (22) oder den externen Server (24) in Kombination mit der Kommunikationsschnittstellenvorrichtung (22), in den Konfigurationsmodus einzutreten.

9. Verfahren nach Anspruch 8, wobei die Verifizierungsdaten einen definierten Satz von Daten, die von dem externen Server (24) empfangen werden, oder einen definierten Satz von Daten, die in der Kommunikationsschnittstellenvorrichtung (22) gespeichert sind, umfassen.

10. Verfahren nach Anspruch 8 oder 9, umfassend das Befinden im Abhörmodus während einer vorbestimmten und einstellbaren Zeitspanne im Bereich von 1 bis 180 Sekunden.

11. Verfahren nach einem der Ansprüche 8 bis 10, umfassend:
- Ermöglichen, dass während des Abhörmodus ein oder mehrere Eingangselemente (28) der Steuerschnittstelle (14) Eingangssignale (26) empfangen, und
- Empfangen der Eingangssignale (26) von einem Bediener der Arbeitsausrüstung (2) durch die Steuerschnittstelle (14).

12. Verfahren nach einem der Ansprüche 8 bis 11, umfassend das Übertragen des Ergebnisses des Vergleichs von über die Steuerschnittstelle (14) empfangenen Eingangssignalen (26) mit dem definierten Satz von Verifizierungsdaten durch die Kommunikationsschnittstellenvorrichtung (22) an den externen Server (24).

13. Verfahren nach einem der Ansprüche 8 bis 12, umfassend das Beenden eines laufenden Konfigurationsmodus, wenn innerhalb einer vorbestimmten Zeitspanne keine Änderung der Konfigurationsparameter vorgenommen wird.

## Revendications

1. Équipement de chantier (2) comprenant :
- un bras mobile (4) relié à une base (6), comprenant en outre un système (8) d'actionneurs agencés pour commander les mouvements du bras par rapport à la base ;
- un système capteur (10) configuré pour surveiller des positions du bras mobile (4), et des conditions de fonctionnement du système (8) d'actionneurs, et pour générer des signaux de capteur (12) en réponse aux positions et conditions de fonctionnement surveillées ;
- une interface de commande (14) agencée pour recevoir un ensemble d'instructions de fonctionnement (16) définissant des mouvements souhaités du bras mobile (4) ;
- un système de commande d'équipement (18) agencé pour stocker des paramètres de configuration pour le système capteur (10), le système (8) d'actionneurs et le bras mobile (4), et pour générer des instructions d'entraînement (20) à appliquer au système (8) d'actionneurs sur la base de l'ensemble reçu d'instructions de fonctionnement (16) définissant les mouvements souhaités du bras mobile (4), les signaux de capteur générés (12) et les paramètres de configuration stockés, et
- un dispositif d'interface de communication (22) agencé pour gérer une session de communication entre l'équipement de chantier (2) et un serveur externe (24) sur un réseau sans fil, dans lequel le dispositif d'interface de communication (22) est connecté au système de commande d'équipement (18) et est en outre agencé pour transmettre des paramètres de configuration ou des indications d'état stockés, reçus depuis le système de commande d'équipement (18), au serveur externe (24) sur le réseau sans fil, **caractérisé en ce que**
A - le dispositif d'interface de communication (22) est configuré pour recevoir une demande de mode de configuration depuis ledit serveur externe (24), dans lequel, dans ledit mode de configuration, le système de commande d'équipement (18) est activé pour changer lesdits paramètres de configuration, et dans lequel le fait d'être en mode de configuration comprend la réception d'instructions au niveau du dispositif d'interface de communication (22) depuis le serveur externe pendant une session de communication qui sont sûres à exécuter par le système de commande d'équipement (18) afin de changer les paramètres de configuration du système de commande d'équipement (18),
B - lors de la réception d'une demande de mode de configuration, le dispositif d'interface de communication (22) est configuré pour entrer dans un mode d'écoute,
C - le dispositif d'interface de communication (22), ou le serveur externe (24), étant en mode d'écoute, est configuré pour comparer un ensemble de données dans des signaux d'entrée (26) reçus via l'interface de commande (14) avec un ensemble défini de données de vérification, et
D - en réponse à la découverte d'un ensemble concordant de données des signaux d'entrée reçus (26) dans ledit ensemble défini de données de vérification, le dispositif d'interface de communication (22), ou le serveur externe (24) en combinaison avec le dispositif d'interface de communication (22), est configuré pour autoriser le système de commande d'équipement (18) à entrer en mode de configuration.

2. Équipement de chantier (2) selon la revendication 1, dans lequel les données de vérification comportent un ensemble défini de données reçues depuis le serveur externe (24) ou un ensemble défini de données stockées dans le dispositif d'interface de communication (22).

3. Équipement de chantier (2) selon la revendication 1 ou 2, dans lequel le dispositif d'interface de communication (22) est configuré pour être dans le mode d'écoute pendant une période de temps prédéterminée et réglable dans la plage de 1 à 180 secondes.

4. Équipement de chantier (2) selon l'une quelconque des revendications 1 à 3, dans lequel, pendant ledit mode d'écoute, le dispositif d'interface de communication (22) ou le système de commande d'équipement (18) est configuré pour permettre à un ou plusieurs organes d'entrée (28) de ladite interface de commande (14) de recevoir lesdits signaux d'entrée (26), et dans lequel l'interface de commande (14) est configurée pour recevoir lesdits signaux d'entrée (26) en provenance d'un opérateur de l'équipement de chantier (2).

5. Équipement de chantier (2) selon l'une quelconque des revendications 1 à 4, dans lequel le dispositif d'interface de communication (22) est en outre agencé pour transmettre le résultat de la comparaison de signaux d'entrée (26) reçus via l'interface de commande (14) avec l'ensemble défini de données de vérification, au serveur externe (24).

6. Équipement de chantier (2) selon l'une quelconque des revendications 1 à 5, dans lequel le dispositif d'interface de communication (22) est configuré pour mettre fin à un mode de configuration en cours si aucun changement de paramètres de configuration n'est réalisé dans une période de temps prédéterminée.

7. Véhicule (1) comprenant un équipement de chantier (2) selon l'une quelconque des revendications 1 à 6.

8. Procédé dans un équipement de chantier (2) selon l'une quelconque des revendications précédentes, **caractérisé en ce que** le procédé comprend :
A - la réception, par le dispositif d'interface de communication (22), d'une demande de mode de configuration depuis ledit serveur externe (24), dans lequel, dans ledit mode de configuration, le système de commande d'équipement (18) est activé pour changer lesdits paramètres de configuration, et dans lequel le fait d'être en mode de configuration comprend la réception d'instructions au niveau du dispositif d'interface de communication (22) depuis le serveur externe pendant une session de communication qui sont sûres à exécuter par le système de commande d'équipement (18) afin de changer les paramètres de configuration du système de commande d'équipement (18) ;
B - l'entrée dans un mode d'écoute du dispositif d'interface de communication (22) ;
C - la comparaison, par le dispositif d'interface de communication (22), ou le serveur externe (24), d'un ensemble de données dans des signaux d'entrée (26) reçus via l'interface de commande (14) avec un ensemble défini de données de vérification, et en réponse à la découverte d'un ensemble concordant de données des signaux d'entrée (26) reçus dans ledit ensemble défini de données de vérification, le procédé comprend en outre :
D - le fait d'autoriser, par le dispositif d'interface de communication (22) ou le serveur externe (24) en combinaison avec le dispositif d'interface de communication (22), le système de commande d'équipement (18) à entrer en mode de configuration.

9. Procédé selon la revendication 8, dans lequel les données de vérification comportent un ensemble défini de données reçues depuis le serveur externe (24) ou un ensemble défini de données stockées dans le dispositif d'interface de communication (22).

10. Procédé selon la revendication 8 ou 9, comprenant le fait d'être dans le mode d'écoute pendant une période de temps prédéterminée et réglable dans la plage de 1 à 180 secondes.

11. Procédé selon l'une quelconque des revendications 8 à 10, comprenant :
- le fait de permettre, pendant ledit mode d'écoute, à un ou plusieurs organes d'entrée (28) de ladite interface de commande (14) de recevoir des signaux d'entrée (26), et
- la réception, par l'interface de commande (14), desdits signaux d'entrée (26) en provenance d'un opérateur de l'équipement de chantier (2).

12. Procédé selon l'une quelconque des revendications 8 à 11, comprenant la transmission, par le dispositif d'interface de communication (22), du résultat de la comparaison de signaux d'entrée (26) reçus via l'interface de commande (14) avec l'ensemble défini de données de vérification, au serveur externe (24).

13. Procédé selon l'une quelconque des revendications 8 à 12, comprenant la fin d'un mode de configuration en cours si aucun changement de paramètres de configuration n'est réalisé dans une période de temps prédéterminée.
